# EUROPÄISCHE PATENTSCHRIFT

(11) **EP 0 775 610 B1**
(45) Veröffentlichungstag und Bekanntmachung des Hinweises auf die Patenterteilung: **08.11.2000**
(21) Anmeldenummer: 96115255.0
(22) Anmeldetag: 24.09.1996
(51) Int. Cl.: B60R 16/02, H01R 35/04, H02G 11/02

(54) **Vorrichtung zur Signalübertragung zwischen zwei Endstellen**
Device for signal transmission between two endpoints
Dispositif de transmission de signaux entre deux points final

(30) Priorität: 23.11.1995 DE 19543670
(43) Veröffentlichungstag der Anmeldung: 28.05.1997
(73) Patentinhaber: Alcatel Kabel AG & Co., 30179 Hannover (DE)
(72) Erfinder: Schauer, Friedrich, 90562 Heroldsberg (DE); Czeschka, Martin, 91177 Thalmässig (DE); Neuner, Andreas, 90478 Nürnberg (DE)
(74) Vertreter: Feray, Valérie

(56) Entgegenhaltungen:
- EP-A- 0 482 937
- DE-A- 4 216 526
- US-A- 4 409 584
- US-A- 4 417 775
- US-A- 5 348 490

## Beschreibung

Die Erfindung bezieht sich auf eine Vorrichtung zur Signalübertragung zwischen zwei Endstellen, zwischen denen eine in Windungen verlaufende und in einer im wesentlichen kreisförmigen Kassette untergebrachte elektrische Leitung angeordnet ist, an die weiterführende Leitungen an den beiden Endstellen anschließbar sind und deren Länge wesentlich größer als der Abstand der beiden Endstellen voneinander ist, bei welcher mindestens eine der beiden Endstellen relativ zu der anderen bewegbar ist und bei welcher die Kassette aus zwei Teilen besteht, einem um die Achse der Kassette drehbaren, mit einem zur Lenksäule eines Kraftfahrzeugs gehörenden Lenkrad verbindbaren Rotor und einem feststehenden, mit einem Lenkstock der Lenksäule verbindbaren Stator, zwischen denen die Leitung angeordnet ist (DE-A-4 216 526).

Eine derartige Vorrichtung wird für die Übertragung eines Signals zum Auslösen des "Airbag" eines Prallschutzes für Kraftfahrzeuge benötigt. Sie ist zur Übertragung eines elektrischen Signals in der Lenkeranordnung eines Kraftfahrzeugs untergebracht. Ein wesentliches Problem für diese Vorrichtung ist die Signalübertragung zwischen feststehenden und beweglichen Teilen des Kraftfahrzeugs. Die für solche Fälle seit langem bekannten, der Stromübertragung dienenden Schleifkontakte bzw. Schleifringe sind einem Verschleiß unterworfen und insbesondere bei niedrigen Stromstärken wegen der schwankenden Übergangswiderstände nachteilig.

Bei der bekannten Vorrichtung nach der eingangs erwähnten DE-A-4 216 526 erfolgt die Stromübertragung durch eine beispielsweise nach Art eines Federhauses gewickelte Flachband-Leitung - im folgenden kurz als "FBL" bezeichnet. Bei einer relativen Drehbewegung der beiden durch die FBL verbundenen Endstellen "atmet" die aufgewickelte FBL wie die Feder einer Uhr. Die Windungen der gewickelten FBL werden in der einen Drehrichtung auf einen kleineren Durchmesser zusammengezogen. Sie gehen in der anderen Drehrichtung wieder auf einen größeren Durchmesser auf. Für den Einbau dieser Vorrichtung in die Lenksäule eines Kraftfahrzeugs ist es daher von Bedeutung, daß die beiden Endstellen eine ganz bestimmte Position zueinander haben, mit einer entsprechenden Position der FBL, damit die vorgegebenen Umdrehungen des Rotors möglich sind, ohne daß die FBL von den Endstellen abgerissen oder sonstwie zerstört wird. Das wird bei dieser bekannten Vorrichtung durch eine spezielle Verriegelung zwischen Rotor und Stator erreicht. Nach Festlegung der Kassette an der Lenksäule des Fahrzeugs wird abschließend nach Lösen der Verriegelung das Lenkrad auf dieselbe aufgesetzt. Die Montage der Kassette erfordert einen gesonderten Arbeitsgang und führt insgesamt zu einer aufwendigen Montage der Lenkradanordnung.

Der Erfindung liegt die Aufgabe zugrunde, die eingangs geschilderte Vorrichtung so zu gestalten, daß die Montage von Kassette und Lenkrad vereinfacht sind.

Diese Aufgabe wird gemäß der Erfindung dadurch gelöst,
- daß die an einem ersten Bauteil der Lenksäule des Kraftfahrzeugs zu befestigende Kassette einen ersten Teil eines elektrischen Steckverbinders aufweist, an dessen Kontaktelemente die Leiter der Leitung elektrisch leitend angeschlossen sind,
- daß an einem zweiten Bauteil der Lenksäule ein zweiter Teil des Steckverbinders mit zu den Kontaktelementen des ersten Teils passenden Gegenkontakten angebracht ist, auf welchen der erste Teil in Montageposition des Lenkrades unter Herstellung einer elektrisch leitenden Verbindung einrastend aufgesteckt ist,
- daß die Kontaktelemente des ersten Teils oder die Gegenkontakte des zweiten Teils des Steckverbinders an einem innerhalb eines Gehäuses in Achsrichtung der Kassette verstellbar geführten Träger angebracht sind und
- daß an die jeweiligen, am Träger angebrachten Kontakte eine dem maximalen Verstellweg des Trägers entsprechende und mit demselben bewegbare Vorratslänge der Leitung angeordnet ist.

Zur Lenksäule des Kraftfahrzeugs gehören das Lenkrad als ein Bauteil und der Lenkstock als anderes Bauteil. Die Kassette kann wahlweise an einem dieser beiden Bauteile montiert werden, bevor das Lenkrad aufgesetzt wird. In der Montageposition der Kassette sind Rotor und Stator derselben in engen Grenzen relativ zu einander drehbar. Das ist beim Aufsetzen des Lenkrades auf den Lenkstock der Lenksäule von Vorteil, damit die beiden Teile des Steckverbinders problemlos zusammengesteckt werden können. Mögliche Toleranzen zwischen Lenkrad und Lenkstock werden dabei durch den beweglich geführten Träger des Steckverbinders ausgeglichen. Die beiden Teile des Steckverbinders werden einrastend miteinander verbunden, so daß eine stabile elektrische Verbindung zwischen der Leitung der Kassette und einer weiterführenden, in der Lenksäule angebrachten Leitung hergestellt ist. Die Verbindung bleibt auch erhalten, wenn das Lenkrad - nach bereits durchgeführter Funktionsprüfung für den Airbaganschluß - zur endgültigen Justierung auf dem Lenkstock der Lenksäule noch einmal um einen kurzen Weg von demselben abgehoben wird. Dieser Weg wird durch den beweglichen Träger und die Vorratslänge der Leitung im Gehäuse des Steckverbinders überbrückt, die dabei mehr oder weniger weit aus dem Gehäuse herausgezogen werden. Beim endgültigen Befestigen des Lenkrades am Lenkstock der Lenksäule werden Träger und Leitung wieder in das Gehäuse des Steckverbinders zurückbewegt.

Vorteilhafte Ausgestaltungen der Erfindung gehen aus den Unteransprüchen hervor.

Ein Ausführungsbeispiel des Erfindungsgegenstandes ist in den Zeichnungen dargestellt.

Es zeigen:
Fig. 1 schematisch eine prinzipielle Darstellung einer Kassette mit einer Vorrichtung nach der Erfindung.
Fig. 2 in schematischer Darstellung einen Querschnitt durch eine Kassette.
Fig. 3 schematisch ein an einer Lenksäule befestigtes Lenkrad mit Kassette.
Fig. 4 einen Teil eines zur Kassette gehörenden Steckverbinders.
Fig. 5 bis 8 unterschiedliche Positionen des Steckverbinders nach Fig. 4.

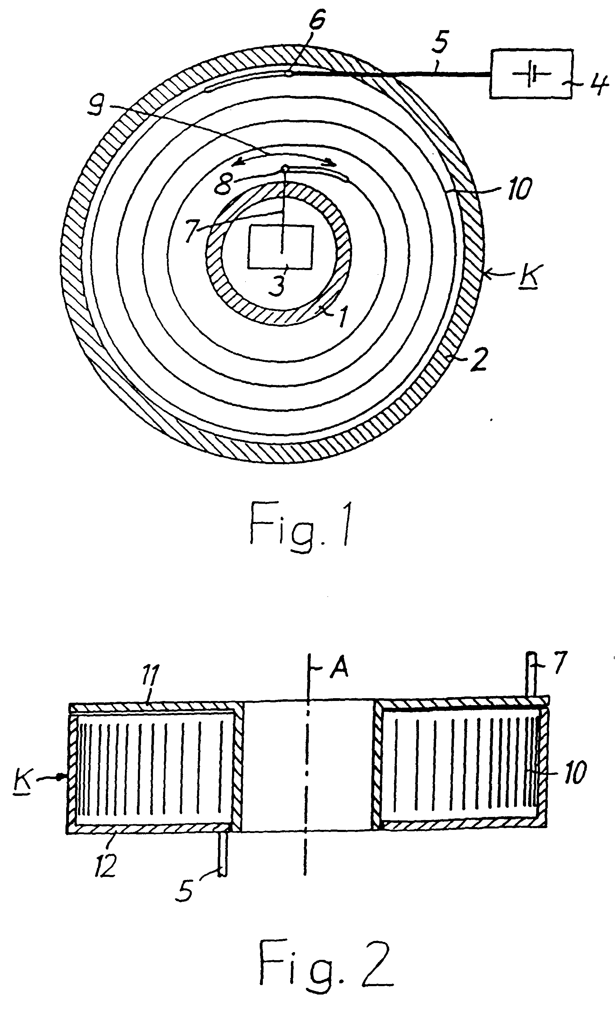

In Fig. 1 sind schematisch zwei beispielsweise kreisförmig ausgebildete Wände 1 und 2 einer Kassette K dargestellt. Sie ist für den Einbau in die Lenkeranordnung eines Kraftfahrzeugs bestimmt. Zur Stromversorgung einer Elektronik 3, durch deren Signal ein Airbag ausgelöst werden kann, ist die Kassette K an die Batterie 4 des Kraftfahrzeugs angeschlossen. Die Batterie 4 ist über eine elektrische Leitung 5 mit einer als Festpunkt ausgeführten Endstelle 6 der Kassette K verbunden. Die Elektronik 3 ist über eine elektrische Leitung 7 an eine Endstelle 8 der Kassette K angeschlossen, die in Richtung des Doppelpfeiles 9 bewegbar ist. Grundsätzlich könnten auch die Endstelle 8 feststehend und die Endstelle 6 bewegbar ausgeführt sein. Es könnten auch beide Endstellen 6 und 8 bewegbar sein.

Zwischen den beiden Endstellen 6 und 8 ist eine Flachbandleitung 10 - im folgenden "FBL 10" genannt - mit mindestens zwei elektrischen Leitern angebracht. Die Leiter sind vorzugsweise als Flachleiter ausgebildet. Diese Ausführungsform der FBL 10 ist besonders dünn und nimmt daher sehr wenig Raum ein. Grundsätzlich könnte die FBL 10 aber auch runde Leiter haben. Der Aufbau der FBL 10 und die Art ihres Anschlusses bzw. Abschlusses an den Endstellen 6 und 8 sind nicht genauer dargestellt. Sie sind prinzipiell in unterschiedlichen Varianten bekannt und hier nicht von Bedeutung.

Die FBL 10 kann gemäß Fig. 1 in der Kassette K zwischen den beiden Endstellen 6 und 8 in mehreren Windungen, also nach Art eines Federhauses von Uhren, angeordnet sein. Obwohl die Anzahl der Umdrehungen eines Lenkrades auf etwa sechs Umdrehungen begrenzt ist, sollen mehr als sechs Windungen für die FBL 10 vorgesehen sein. Die Drehbewegung der Endstelle 8 macht sich dann für eine einzelne Windung der FBL 10 nicht wesentlich bemerkbar. Es wird lediglich der Durchmesser des aus allen Windungen der FBL 10 bestehenden Wickels verkleinert bzw. vergrößert. Die FBL 10 kann aber auch in zwei Teilbereichen mit unterschiedlicher Wickelrichtung, zwischen denen eine Umkehrstelle liegt, in der Kassette K angebracht sein.

Die Kassette K besteht gemäß Fig. 2 aus einem Rotor 11 und einem Stator 12. Der Rotor 11 ist gegenüber dem Stator 12 um die Achse A der Kassette K drehbar. Der in Montageposition feststehende Stator 12 umschließt die FBL 10, von der in Fig. 2 nur einige Windungen schematisch eingezeichnet sind. An die FBL 10 sind die weiterführenden, aus der Kassette K herausgeführten elektrischen Leitungen 5 und 7 angeschlossen.

Die Kassette K kann mit vorgegebener Montageposition, in der Rotor 11 und Stator 12 in engen Grenzen relativ zueinander drehbar sind, entweder am Lenkrad oder am Lenkstock der Lenksäule eines Kraftfahrzeugs montiert werden. Der bewegliche Träger im Steckverbinder der Kassette K kann an deren Stator 12 oder an deren Rotor 11 angebracht sein. Er kann aber auch in Abhängigkeit vom Einbau der Kassette K entweder am Lenkrad oder am Lenkstock der Lenksäule angeordnet sein. In der folgenden Beschreibung wird stellvertretend für die anderen Aufbaumöglichkeiten davon ausgegangen, daß die Kassette K über ihren Rotor 11 in einer Vormontage am Lenkrad befestigt ist und daß der verstellbare Träger sich in einem Gehäuse des Stators 12 der Kassette K befindet.

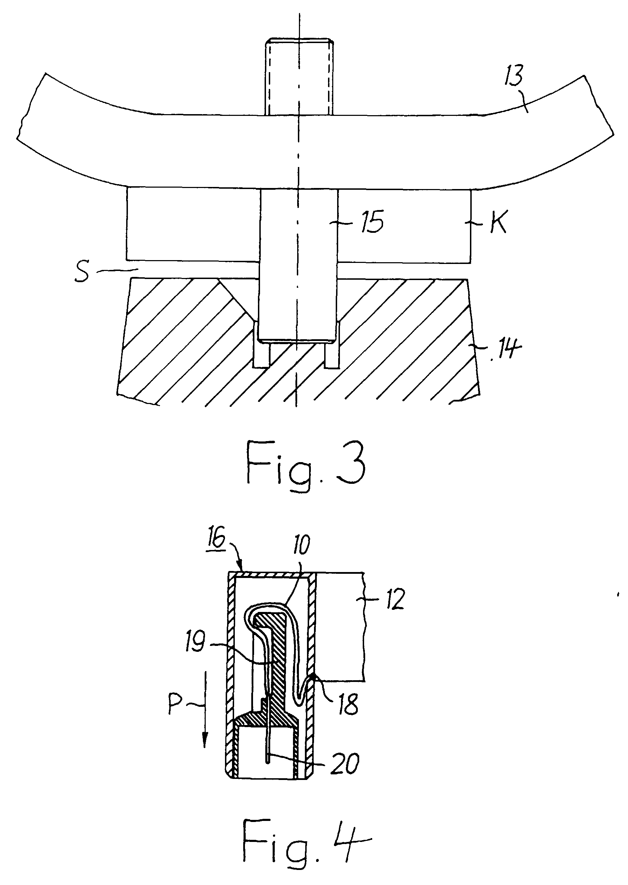

Die Kassette K ist gemäß Fig. 3 am nur ausschnittsweise angedeuteten Lenkrad 13 eines Kraftfahrzeugs angebracht. Dazu ist der Rotor 11 am Lenkrad 13 befestigt, die gemeinsam gedreht werden. Der Stator 12 wäre nach der Montage der Kassette K am Lenkrad 13 grundsätzlich um den Rotor 11 drehbar. Er ist allerdings in einer Montageposition gegenüber dem Rotor 11 verriegelt, so daß nur eine geringfügige Relativbewegung zwischen Rotor 11 und Stator 12 möglich ist.

Das Lenkrad 13 mit daran angebrachter Kassette K ist auf den ebenfalls nur schematisch angedeuteten Lenkstock 14 der Lenksäule des Kraftfahrzeugs aufgesetzt und nach endgültiger Montage fest, aber drehbar mit demselben verbunden. Dabei hält ein in Fig. 3 nur schematisch angedeuteter Steckverbinder 15, dessen erster Teil am Stator 12 und dessen zweiter Teil am Lenkstock 14 befestigt sind, den Stator 12 unverdrehbar fest. Zur zusätzlichen Verdrehsicherung des Stators 12 in der endgültigen Montageposition können an der Lenksäule 14 beispielsweise noch Stifte angebracht sein, die in korrespondierende Ausnehmungen des Stators 12 hineinragen.

Aufbau und Wirkungsweise des ersten Teils des Steckverbinders 15 gehen beispielsweise aus den Fig. 4 bis 8 hervor:

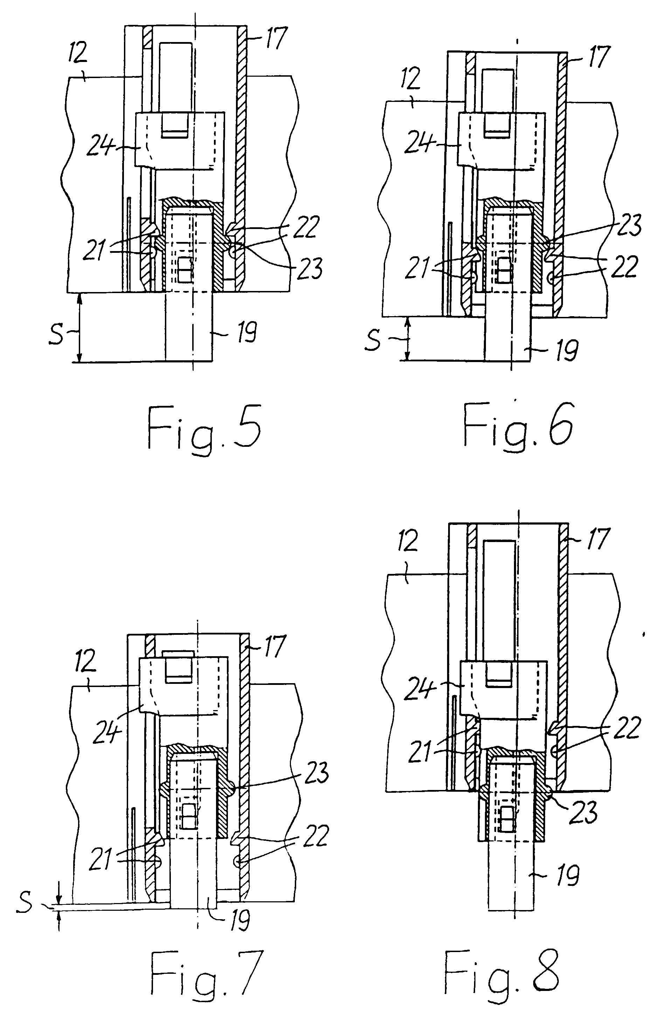

Der erste Teil 16 des Steckverbinders 15 ist als schachtartiges Gehäuse 17 ausgebildet, das fest mit dem Stator 12 verbunden ist. In das Gehäuse 17 ragt die FBL 10 an der Stelle 18 hinein. Im Gehäuse 17 ist ein Träger 19 angebracht, der in der durch den Pfeil P angedeuteten Achsrichtung der Kassette K innerhalb des Gehäuses 17 beweglich ist. Der Träger 19 ist unverlierbar im Gehäuse 17 angebracht. Er trägt Kontaktelemente 20, an welche die Leiter der FBL 10 angeschlossen sind. Im dargestellten Ausführungsbeispiel dient der Träger 19 außerdem zur Führung der FBL 10, die in einer Vorratslänge teilweise um denselben herumgelegt ist. Der Träger 19 ist im Gehäuse 17 in unterschiedlichen, aus den Fig. 5 bis 8 hervorgehenden Positionen verrastbar.

In Fig. 5 ist der Steckverbinder 15 in der Montageposition der Kassette K dargestellt. Der Träger 19 ragt verhältnismäßig weit aus dem Gehäuse 17 heraus, damit seine Kontaktelemente 20 ohne Schwierigkeiten mit den Gegenkontakten des zweiten Teils des Steckverbinders 15 im Lenkstock 14 zusammengesteckt werden können. In dieser Montageposition ist der Träger 19 durch nach außen von demselben abstehende Vorsprünge 21 zwischen Rastnasen 22 und 23 gehalten, die innen am Gehäuse 17 angebracht sind.

Nach dem Aufsetzen des Lenkrades 13 auf den Lenkstock 14 sind die beiden Teile des Steckverbinders 15 zusammengesteckt. Die Kontakelemente 20 des ersten Teils 16 liegen dann an den Gegenkontakten des zweiten Teils des Steckverbinders 15 an, der Bestandteil des Lenkstocks 14, aber nicht genauer dargestellt ist. In der zusammengesteckten Position sind die beiden Teile des Steckverbinders 15 eingerastet und dadurch so fest miteinander verbunden, daß sie nur beim vollständigen Entfernen des Lenkrades 13 vom Lenkstock 14 durch erhöhte Krafteinwirkung wieder gelöst werden. Diese Position des Steckverbinders 15 bzw. des Trägers 19 geht aus Fig. 6 hervor. Ein Funktionstest der Teile des Airbaganschlusses kann dann durchgeführt werden.

Der Träger 19 mit den Kontaktelementen 20 kann in der zusammengesteckten Position des Steckverbinders 15 unterschiedliche Stellungen einnehmen. Das hängt von der Größe des zwischen Lenkrad 13 und Lenkstock 14 verbleibenden Spaltes S (Fig. 3) ab, der beispielsweise zwischen 1 mm und 7 mm schwanken darf.

In der aus Fig. 6 ersichtlichen Position liegen die Vorsprünge 21 des Trägers 19 oberhalb der Rastnasen 22 und 23. Diese Position des Trägers 19 entspricht einem großen Spalt S von beispielsweise 7 mm. Bei einem kleinen Spalt S von beispielsweise nur 1 mm hat der Träger 19 die aus Fig. 7 ersichtliche Position. Er liegt dann einschließlich der FBL 10 nahezu an der oberen Begrenzung des Gehäuses 17 an.

Zur endgültigen Montage des Lenkrades 13 wird dasselbe um eine kurze, definierte Strecke angehoben, in die richtige Position (Mittenstellung) gedreht und dann endgültig am Lenkstock 14 der Lenksäule befestigt. Bei dem ganzen Vorgang darf die Steckverbindung zwischen den Teilen des Steckverbinders 15 nicht gelöst werden. Um das zu ermöglichen, hat die FBL 10 im Gehäuse 17 des Steckverbinders 15 eine ausreichende Vorratslänge. Beim Anheben des Lenkrades 13 wird der Träger 19 maximal bis in die aus Fig. 8 ersichtliche Endposition aus dem Gehäuse 17 herausgezogen.

Ein weiteres Herausziehen wird durch den Vorsprung 24 verhindert, der in einem im Gehäuse 17 angebrachten, in axialer Richtung verlaufenden Schlitz bewegt werden kann. Durch den Vorsprung 24 ist auch die Unverlierbarkeit des Trägers 19 im Gehäuse 17 gesichert. Die gemäß Fig. 4 im Gehäuse 17 mit Vorratslänge angeordnete FBL 10 kann der Bewegung des Trägers 19 folgen. Beim Wiederaufsetzen des Lenkrades 13 auf die Lenksäule 14 werden Träger 19 und FBL 10 zurück in das Gehäuse 17 bewegt.

Die FBL 10 kann im Gehäuse 17 in jeder möglichen geeigneten Form als Vorratslänge angeordnet sein. Sie könnte zwischen der Stelle 18 und den Kontaktelementen 20 beispielsweise auch quer zu ihrer Längsrichtung mehrfach gefaltet sein.

## Patentansprüche

1. Vorrichtung zur Signalübertragung zwischen zwei Endstellen, zwischen denen eine in Windungen verlaufende und in einer im wesentlichen kreisförmigen Kassette (K) untergebrachte elektrische Leitung (10) angeordnet ist, an die weiterführende Leitungen an den beiden Endstellen (6, 8) anschließbar sind und deren Länge wesentlich größer als der Abstand der beiden Endstellen (6, 8) voneinander ist, bei welcher mindestens eine der beiden Endstellen (6, 8) relativ zu der anderen bewegbar ist und bei welcher die Kassette (K) aus zwei Teilen besteht, einem um die Achse der Kassette (K) drehbaren, mit einem zur Lenksäule eines Kraftfahrzeugs gehörenden Lenkrad (13) verbindbaren Rotor (11) und einem feststehenden, mit einem Lenkstock (14) der Lenksäule verbindbaren Stator (12), zwischen denen die Leitung (10) angeordnet ist, dadurch gekennzeichnet,
- daß die an einem ersten Bauteil der Lenksäule des Kraftfahrzeugs zu befestigende Kassette (K) einen ersten Teil (16) eines elektrischen Steckverbinders (15) aufweist, an dessen Kontaktelemente (20) die Leiter der Leitung (10) elektrisch leitend angeschlossen sind,
- daß an einem zweiten Bauteil der Lenksäule ein zweiter Teil des Steckverbinders (15) mit zu den Kontaktelementen (20) des ersten Teils (16) passenden Gegenkontakten angebracht ist, auf welchen der erste Teil (16) in Montageposition des Lenkrades (13) unter Herstellung einer elektrisch leitenden Verbindung einrastend aufgesteckt ist,
- daß die Kontaktelemente (20) des ersten Teils (16) oder die Gegenkontakte des zweiten Teils des Steckverbinders (15) an einem innerhalb eines Gehäuses (17) in Achsrichtung der Kassette (K) verstellbar geführten Träger (19) angebracht sind und
- daß an die jeweiligen, am Träger (19) angebrachten Kontakte eine dem maximalen Verstellweg des Trägers (19) entsprechende und mit demselben bewegbare Vorratslänge der Leitung (10) angeschlossen ist.

2. Vorrichtung nach Anspruch 1, dadurch gekennzeichnet, daß das Gehäuse (17) mit dem verstellbaren Träger (19) am Stator (12) der Kassette (K) angebracht ist.

3. Vorrichtung nach Anspruch 1, dadurch gekennzeichnet, daß das Gehäuse (17) mit dem verstellbaren Träger (19) am Rotor (11) der Kassette (K) angebracht ist.

4. Vorrichtung nach Anspruch 1, dadurch gekennzeichnet, daß das Gehäuse (17) mit dem verstellbaren Träger (19) am Lenkrad (13) des Kraftfahrzeugs angebracht ist.

5. Vorrichtung nach Anspruch 1, dadurch gekennzeichnet, daß das Gehäuse (17) mit dem verstellbaren Träger (19) am Lenkstock des Kraftfahrzeugs angebracht ist.

6. Vorrichtung nach einem der Ansprüche 1 bis 5, dadurch gekennzeichnet, daß die Leitung (10) innerhalb des Gehäuses (17) des Steckverbinders (15) durch den Träger (19) geführt ist.

7. Vorrichtung nach einem der Ansprüche 1 bis 6, dadurch gekennzeichnet, daß der Träger (19) im Gehäuse (17) des Steckverbinders (15) in unterschiedlichen Positionen verrastbar ist.

8. Vorrichtung nach einem der Ansprüche 1 bis 7, dadurch gekennzeichnet, daß der Träger (19) unverlierbar im Gehäuse (17) des Steckverbinders (15) angebracht ist.

## Claims

1. Device for the transmission of signals between two end points, between which is placed a coiled electric cable (10) housed in an essentially circular cassette (K), to which continuing wires can be connected at the two end points (6, 8) and the length of which is essentially greater than the distance between the two end points (6, 8), where at least one of the two end points (6, 8) is movable in relation to the other and where the cassette (K) consists of two parts, a rotor (11) rotatable around the axis of the cassette (K) connectable with a steering wheel (13) belonging to the steering column of a vehicle and a fixed stator (12) connectable with a steering rod (14) of the steering column between which the cable (10) is arranged, characterised in that
- the cassette (K) to be mounted on a first component part of the steering column of the vehicle has a first part (16) of an electric pin and socket connector (15) to the contact elements (20) of which the conductors of the cable (10) are electrically connected.
- a second part of the pin and socket connector (15) with counter contacts matching the contact elements (20) of the first part (16) is fitted on a second component part of the steering column, onto which the first part (16) is placed in a detachable way with the steering wheel (13) in assembly position, hereby producing an electrical connection.
- the contact elements (20) of the first part (16) or the counter contacts of the second part of the pin and socket connector (15) are mounted on a bracket (19) fitted in an adjustable way inside a housing (17) in the axial direction of the cassette (K) and
- a reserve length of the cable (10) corresponding to the maximum adjustable distance of the bracket and movable with the same is connected to the individual contacts mounted on the bracket (19).

2. Device according to Claim 1 characterised in that the housing (17) with the adjustable bracket (19) is fitted to the stator (12) of the cassette (K).

3. Device according to Claim I, characterised in that the housing (17) with the adjustable bracket (19) is fitted to the rotor (11) of the cassette (K).

4. Device according to Claim I, characterised in that the housing (17) with the adjustable bracket (19) is fitted to the steering wheel (13) of the vehicle.

5. Device according to Claim 1, characterised in that the housing (17) with the adjustable bracket (19) is fitted to the steering rod of the vehicle.

6. Device according to one of Claims 1 to 5, characterised in that the cable (10) is guided inside the housing (17) of the pin and socket connector (15) by the bracket (19).

7. Device according to one of Claims 1 to 6, characterised in that the bracket (19) in the housing (17) of the pin and socket connector (15) can be adjusted in various positions.

8. Device according to one of Claims 1 to 7, characterised in that the bracket (19) is held in the housing (17) of the pin and socket connector (15) in captive way.

## Revendications

1. Un dispositif de transmission de signal entre deux points d'extrémité reliés entre eux par un conducteur électrique (10) spiralé et disposé dans une cassette (K) dont la forme est essentiellement circulaire, ce conducteur électrique (10) pouvant être raccordé en ses deux extrémités à des conducteurs de prolongement (6, 8) dont la longueur est beaucoup plus importante que l'écart entre les deux extrémités (6, 8), dans ce dispositif au moins une des deux extrémités (6, 8) peut se déplacer relativement par rapport à l'autre, et la cassette (K) est constituée de deux pièces dont l'une est capable de tourner autour de l'axe de la cassette (K) sous la forme d'un rotor (11) appartenant au volant (13) de direction correspondant de la colonne de direction d'un véhicule automobile, et l'autre pièce étant un stator (12) fixe pouvant être relié à l'arbre (14) de la colonne de direction, le conducteur électrique (10) étant situé entre ces deux pièces; ce dispositif étant caractérisé par le fait que,
- la cassette (K), devant être fixée à une première pièce de la colonne de direction du véhicule automobile, comporte une première partie (16) d'un connecteur électrique enfichable (15) possédant des éléments de contact (20) qui sont liés électriquement aux conducteurs du câble électrique (10),
- une deuxième pièce de la colonne de direction comporte une deuxième partie (15) du connecteur enfichable qui possède des éléments de contact (20) opposés et complémentaires à ceux de la première partie (16), en position de montage du volant de direction (13) la première partie (16) viendra s'encliqueter dans la deuxième partie (15) en établissant une liaison électrique,
- les éléments de contact (20) de la première partie (16), ou les éléments de contact opposés de la deuxième partie (15) du connecteur enfichable seront montés sur un support (19) mobile en rotation suivant l'axe de la cassette (K) et situé à l'intérieur d'un boîtier (17), et
- une réserve de longueur du câble (10) sera raccordée aux contacts situés sur le support (9) et possédera une longueur suffisante pour les déplacements du support (9) avec lequel le câble se déplace.

2. Un dispositif conforme à la revendication 1, caractérisé par le fait que le boîtier (17) avec son support mobile (19) est fixé sur le stator (12) de la cassette (K).

3. Un dispositif conforme à la revendication 1, caractérisé par le fait que le boîtier (17) avec son support mobile (19) est fixé sur le rotor (11) de la cassette (K).

4. Un dispositif conforme à la revendication 1, caractérisé par le fait que le boîtier (17) avec son support mobile (19) est fixé sur le volant de direction (13) du véhicule automobile.

5. Un dispositif conforme à la revendication 1, caractérisé par le fait que le boîtier (17) avec son support mobile (19) est fixé sur l'arbre de direction (13) du véhicule automobile.

6. Un dispositif conforme à une des revendications 1 à 5, caractérisé par le fait que le câble (10) est passé au travers du support (19) à l'intérieur du boîtier (17) du connecteur enfichable (15).

7. Un dispositif conforme à une des revendications 1 à 6, caractérisé par le fait que le support (19) à l'intérieur du boîtier (17) du connecteur enfichable (15) peut s'encliqueter à différentes positions de hauteur.

8. Un dispositif conforme à une des revendications 1 à 7, caractérisé par le fait que le support (19) est monté imperdable à l'intérieur du boîtier (17) du connecteur enfichable (15).
